# EUROPEAN PATENT APPLICATION

(11) **EP 4 740 740 A1**
(43) Date of publication of application: **13.05.2026**
(21) Application number: 24211700.0
(22) Date of filing: 08.11.2024
(51) Int. Cl.: A23B 7/005, A23B 7/03, A23L 5/10, A23L 19/12, A23L 19/18

(54) **PROCESS AND APPARATUS TO MAKE PROCESSED FOOD PRODUCTS**

(71) Applicant: ZEEN Holding AG, 6405 Immensee (CH)
(72) Inventor: ZEHNDER, Josef, 6317 Oberwil (CH)
(74) Representative: Stolmár & Partner Intellectual Property GmbH

(57) **Abstract**

The present invention discloses a process to make processed food products (1) in a superheated steam environment and without the addition of oil in superheated steam, wherein, one or more elements (5) to direct a steam flow are placed to direct the superheated steam from below the basket (2) with the food products (1) to be processed, wherein the speed of the gas circulation unit (6) is adjusted to allow the food products (1) being processed to float at least partially in the superheated steam flow.

Claimed is also an apparatus (3*) for applying the process, the use of the process of the invention and/or of the apparatus (3*) of the invention to process food products (1). Furthermore, claimed is also use of said process and/or of the apparatus (3*) to obtain the processed food products (1).

## Description

The present invention relates to a process to make processed food products in a superheated steam environment and without the addition of oil, an apparatus for use in said process, as well as the uses of said process and said apparatus.

Processed food products, such as potato chips or fries, chicken wings or fried fruit or vegetable slices became beloved snacks and finger food. They are all processed using oil. As a matter of fact, the presence of oil is an essential element in today's processing techniques in order to give processed food products a unique taste and crisp.

However, the presence of oil during processing such food products has also a number of disadvantages. Besides being unhealthy due to the presence of oil, the latter may also lead to the formation of acrylamide, which is assumed to be a carcinogenic compound. In addition, processing food containing oil needs to be packed under a protective atmosphere, such as nitrogen, which contributes to an additional packaging step, thus increasing cost of the product.

Hence, it is the objective of the present invention to overcome said problems. Although various attempts were made in past, no disclosed process technology is good enough to bring such food processed without oil to a breakthrough.

Surprisingly, this highly demanding object is solved by a process to make processed food products (1) in a superheated steam environment and without the addition of oil according to claim 1.

Claimed also is an apparatus (3*) according to claim 9 for applying the inventive process.

In addition, claimed is also the use of the inventive process and/or the inventive apparatus (3*) according to claim 14 to process food products (1).

Furthermore, claimed also is the use of the processed food products (1) according to claim 15, obtained from the inventive process and/or with the inventive apparatus (3*).

The process, apparatus and the uses of the present invention provide surprisingly a number of different advantages.

The process is fast, straightforward, and no complex installation is required. Pressure may be applied but is not required. In addition, it is not required - although possible - to evacuate the apparatus (3, 3*). Hence the equipment may only be designed to work under standard pressure and elevated temperatures.

Most importantly, the food products (1) can be processed without addition of oil, while the final product taste - having comparable types and amounts of artificial flavor - is very similar to today's processed food products comprising oil. Hence, the food products (1) may only comprise oil added before or after the process of the invention. Therefore, the processed food products (1) are healthier due to the absence of oil and toxic acrylamide. In addition, the packaging of the processed food products may occur in the presence of oxygen, and thus air. No specific protective atmosphere is required.

Furthermore, it was surprisingly found that the process of the invention reduces significantly, or omits completely, the Maillard-reaction, i.e. the embrowning of the starch-based food products (1), which has a negative impact of the taste of the processed food products (1). It is believed that this is due to the presence of superheated steam, and the absence of oxygen as well as of oil.

The apparatus (3*) of the present invention is safe and easy to handle. Most surprisingly, oxygen gas present in the initial air environment can be displaced readily, e.g., within a fraction of a minute, and without evacuation step, just by introducing sufficient amount of water being evaporated in the apparatus (3*). Additionally, since no oil is added to the food products (1) to be processed, no or only minor soiling of the inside of the apparatus (3*) occurs, thus the cleaning effort is significantly reduced.

Hence, a wide variety of different food products (1) can be processed, thus obtaining many different types of processed food products (1). And surprisingly, it was found that food processing using the present invention and /or apparatus may be 30-50% faster, depending on the food products, e.g., pellets and their composition, used. And the energy consumption may be reduced by about 80%, compared to conventional frying.

### The process

The process according to the invention allows to make processed food products (1) without the addition of oil, wherein the food products (1) to be processed are added to a basket (2) which is or is placed into an apparatus (3) comprising one or more elements (5) to direct a steam flow, a gas circulating unit (6), an inlet (7) to feed water and/or steam into the apparatus (3), and a gas/liquid outlet (8), wherein
- water and/or steam is fed through the inlet (7) into the apparatus (3), wherein, when water is added, the water is evaporated with a heating element (4), and the gas temperature in the apparatus (3) is or is adjusted to be 130°C to 330°C,
- the pressure in the apparatus (3) is allowed to be at least 2.5 bar below the boiling pressure of water at the gas temperature in the apparatus (3) to allow steam to be superheated steam, and
- the gas circulating unit (6) is adjusted to allow a gas circulation speed of at least 5 m/sec, preferably at least partially 7.5 m/sec or more, in particular at least partially 10 m/sec or more, when measured between the elements (5) and the basket (2),
wherein the one or more elements (5) are placed to direct the superheated steam from below the basket (2) to the food products (1) to be processed, wherein the speed of the gas circulation unit (6) is adjusted to allow the food products (1) being processed to float at least partially in the superheated steam flow.

In an additional, following step, the processed food products may be seasoned, i.e., spices may be added. Preferably, this step is made immediately after the process, thus making use of redundant heat and moisture. By doing so, a perfect seasoning coating can be ensured.

Hence, food products (1) to be processed in the process may contain oil, e.g., oil may be added in a food processing step before the process of the invention. However, no oil at all is required for this process. The term "without the addition of oil" may, however, include minor amounts of oil, e.g., up to 5 wt.%, preferably up to 2 wt.%, of oil, based on the amount of food product (1) added to the process. Nevertheless, most preferably, the addition of no oil at all, i.e., 0 wt.%, is preferred.

The process requires the addition of steam, i.e., evaporated water, and/or water into the apparatus (3). When steam is fed through the inlet (7), it may have a temperature of e.g., up to 600°C or higher to maintain the elevated temperature in the apparatus (3) of e.g., 130°C to 330°C.

Despite the high temperature of the steam, the pressure in the apparatus (3) may be, preferably, about outside pressure, i.e., there may be no valve and a large enough gas/liquid outlet (8) to allow unhindered gas/liquid transfer from inside the apparatus (3) to the outside. However, it is also possible to have elevated pressure in the apparatus. In this case, it has to be at least 2.5 bar below the boiling pressure of water at the gas temperature in the apparatus (3) to assure the presence of superheated steam, i.e. steam being below the boiling point of water at its temperature. Hence, superheated steam is not saturated with water. Therefore, when superheated steam is getting into contact with a material surface comprising water at a temperature well above the boiling point of water at its pressure, the superheated steam absorbs the water from said material. Hence, the material dries.

The one or more elements (5) may be in the form of one or more flaps or slots and are placed below the basket (2) but may be also part of the casing of the apparatus (3). They may be static or movable, e.g., due to the gas flow or being directed by a motor, e.g., by oscillation. They are arranged to reroute the superheated steam coming from the steam inlet (7), the heating element (4) and/or the gas, i.e., steam, circulated by the circulating unit (6) into the basket (2) and thus to flow around the food products (1) being processed, which float inside the basket at least partially in the superheated steam flow.

The speed of the gas circulation unit (6) inside the apparatus (3) is adjusted to allow the food products (1) being processed to float at least partially in the superheated steam flow. The circulation speed of the gas is preferably detected with e.g. a flow meter, such as a vane or dine anemometer, and e.g., according to DIN EN ISO 17713-1:2007. and can adjusted based on the requirements of the food products (1) being processed. It is noted that the required speed depends on the type, specific weight and amount of products (1) being processed. In addition, the gas speed requirements change during the processing of the food products (1) due do the different water content in food products (1). With other words: At the beginning of the process, the water content is high and may be about 80 wt.%. Hence, the gas speed may need to be adjusted to 10 to 25 m/sec or more, depending on the type and amount of food products (1) to be processed. During the processing of the food products (1) the water content - and thus also its density - is reduced to e.g. about 2 wt.%. Thus, in order to maintain the degree of floating, the gas speed can be reduced, e.g., to 10 m/sec or lower, or even to 7 m/sec or lower.

The basket (2) is preferably a grid with apertures small enough to maintain the food products (2) inside the basket (2), and large enough to allow steam to pass through without any hindrance, but small enough to avoid loss of products (2) being processed. The basket (2) may be open or closed, i.e., having a closure. If it is open, the basket (2) should be high enough to avoid loss of floating food products (1). Thus, the side walls of the basket (2) may be 10 cm or higher, depending on the floating height of the food products (1).

In this process, the food products (1) to be processed are added and removed to a basket (2) either outside or inside the apparatus (3). It is noted that no special care must be taken upon addition, i.e., the individual food products may or may not contact each other. This allows a fast delivery of the food products (1) into the basket (2). If the filling of the basket (2) occurs outside the apparatus (3), the basket (2) is entered into the apparatus (3) with the food products (1) to be processed. Hence, the apparatus (3) preferably comprises a door (11) to enter and remove the basket (2) and/or the food products (1).

In a preferred embodiment, the basket (2) is a closable basket, and the apparatus (3) comprises an engine capable of rotating the basket (2) inside the apparatus (3). The rotation of the basket (2) most typically helps to enable floating the food products (1) to be processed. The rotation speed is preferably adjusted based on the specific food product (1) being processed and depends on the specific employed food products (1) and its moisture content, i.e., the rotation speed may be higher at the beginning of the process. With continued processing the food products (1), there moisture content and their density is reduced, which allows a lower rotation speed. Nevertheless, rotation speed of the basket (2) and the gas circulating unit (6), and thus the gas circulation speed, can mutually adjusted for an optimal floating of the food products (1).

The amount of food products (1) to be processed in the basket (2) is preferably 20 vol.% or lower, in particular 10 vol.% or lower, based on the volume of the basket (2). This provides sufficient room for the food products (1) to float freely and for the steam to flow around them.

In a particularly preferred embodiment of the process, the oxygen content, i.e. oxygen gas, i.e., O₂, in the apparatus (3) is reduced in a first step to 3 vol.% or lower, preferably by evacuation or displacement by a gas free of oxygen (O₂), preferably steam. It was surprisingly found that, when the gas/liquid outlet (8) is placed in the lower end of the apparatus (3), in particular below the one or more elements (5) to direct the steam flow, and in the lower 10% of the apparatus (3), the oxygen content in the atmosphere of the apparatus (3) can easily and significantly be reduced by feeding a large amount of steam into the apparatus, and/or water to the heating element (4) to be evaporated inside the apparatus. Hence, the steam is displacing the oxygen readily.

In a preferred embodiment of the process, is
- the process a batch process, which allows a best mode operation of the process,
- the gas, i.e., steam, temperature in the apparatus (3) between 140°C and 330°C, preferably between 150°C and 300°C, which allows fast processing of the food products (1), which increases the retention of e.g. vitamins,
- the gas pressure in the apparatus (3) about room pressure, i.e., there is free gas transfer from the apparatus (3) to the outside environment, which allows an easy and safe handling of the process and allows the apparatus (3) not to be a pressure reactor,

- the processing time of the food products (1) between 0.1 to 10 minutes, preferably between 0.1 and 7 minutes, thus allowing fast processing of the food products (1), and maintaining nutrients in the processed food products (1), such as vitamins and enzymes, and/or
- the oxygen (O₂) content in the apparatus (3) adjusted to be 2 vol.% or lower, preferably 1 vol.% or lower, which omits, or at least minimizes, oxidation of the food products (1) being processed, which increases the durability of the processed products (1), while maintaining the favorable taste.

Preferably, the apparatus (3) comprises one or more sensors (9) to measure temperature, gas circulation speed, humidity, oxygen content and/or pressure, and a control unit (10) to adjust the temperature, gas circulation speed, humidity, pressure, and/or the amount of water and/or gas inlet. The sensors (9) are connected to the control unit (10), and the control unit (10) to the heating element (4), to the steam and/or water inlet (7) to adjust the temperature and/or humidity, to the gas circulation unit (6) to adjust the gas circulation speed, and, if present, to the pressure to adjust the valve (81) to regulate the gas/liquid outlet (8). Suitable sensors (9) are commercially available and known to the skilled person.

The food products (1) to be processed in the process include preferably i) raw food products, such as potato slices, nuts or corn; ii) processed dry food products, i.e., pellets for expandable snacks; iii) frozen products, such as potato fries, chicken wings or fish bites; iv) food products to be sterilized, such as fruits, meats, seafood, or ready meals; v) reheat food products, such as ready meals; and/or vi) set products, such as apply a coating onto a food product.

The processed food products (1) in the process include preferably chips from potatoes, fruits, vegetables or tortilla chips; expanded or extruded snacks; popcorn; nuts; dried products from fruits, vegetables, herbs; potato fries or croquettes; chicken nuggets or wings; coated products, such as schnitzel; fish bites; burger patties; and/or sterilized food, such as fruits, meats, seafood, ready meals; ready meals.

### The apparatus (3*)

The apparatus (3*) according to the invention is intended to apply the process of the invention and comprises the basket (2), the heating element (4), one or more elements (5) to direct steam flow, the gas circulating unit (6), the inlet (7) to feed water into the apparatus (3*), the gas/liquid outlet (8), and a door (11) to enter into and exit food products (1) from the apparatus (3*), wherein
- the one or more elements (5) are placed below the basked (2), to direct the superheated steam flow from the heating element (4) and/or from the gas circulating unit (6) to the food products (1) to be processed from below to facilitate that the food products (1) to be processed to float at least partially in the superheated steam flow. and
- the gas/liquid outlet (8), e.g., just a hole in the apparatus connected to a hose or tube, is placed
   i) below the one or more elements (5) which direct the steam flow, and
   ii) in the lower 10% of the apparatus (3*)
to allow a fast displacement of air and thus depletion of the gas phase from oxygen.

It is noted that the apparatus (3) employed in the process of the invention is not limited to the apparatus (3*) of the invention and thus may include different embodiments. However, the heating element (4), the one or more elements (5) to direct steam flow, the gas circulating unit (6), an inlet (7) to feed water into the apparatus (3*), the gas/liquid outlet (8), the sensors (9) and the control unit (10) may well be the same for the apparatus (3*) as well as for the apparatus (3) employed in the process. The same applies to the food products (1) to be processed and the processed food products (1).

The apparatus (3*) is preferably a closed apparatus. Its casing as well as the components (2, 4, 5, 6, 7, 8) therein are preferably made of high-grade steel which is corrosion resistant. A typical, and preferred, example is stainless-steel 304. The components (2, 4, 5, 6, 7, 8) are commercially available and the skilled person is capable of assembling the apparatus (3*).

The basket (2) in the apparatus (3*) may be stationary or rotatable. Furthermore, it is often preferred that the basket (2) is removable from the apparatus (3*).

In a preferred embodiment, the apparatus (3*) comprises an engine capable to rotate the basket (2) inside the apparatus (3*), wherein the rotation axis of the basket is horizontal and/or within a deflection of +/- 60° or lower, preferably +/- 45° or lower, relative to the horizontal axis. The rotation of the basket (2) most typically helps to enable floating the food products (1) to be processed.

The one or more elements (5) in the apparatus (3*) are placed below the basked (2) to direct the superheated steam flow from the heating element (4) and/or from the gas circulating unit (6) to the food products (1) to be processed from below to facilitate that the food products (1) to be processed to float at least partially in the superheated steam flow. The elements (5) may be fixed, e.g., being part of the casing, free floating, or adjustable using a motor, e.g., by oscillation.

In another preferred embodiment of the apparatus (3*), the
- water inlet (7) is placed to feed water to the heating element (4), wherein the water inlet (7) is directly connected to the heating element (4) for immediate evaporation,
- heating element (4) enables temperatures of 380°C or higher, thus, to allow the generation of superheated steam efficiently,
- the gas circulating unit (6) is placed to vent the gas out of the basket (2) to allow an efficient circulation of steam as well as directing the steam from below the basket (2) towards the food products (1) to be processed, wherein the gas circulating unit (6) is preferably a fan or blower, and/or
- the gas/liquid outlet (8) is placed in the lower 5% of the apparatus (3*), preferably at the bottom of the apparatus (3*) to enable efficient displacement of air, and thus depletion of the gas phase form oxygen.

The heating element (4) of the apparatus (3*) is capable to evaporate water, which is fed through the inlet (7), efficiently and instantly. Hence, it is often preferred that the heating element (4) enables temperatures of 450°C or higher, particularly 550°C or higher. Suitable heating elements (4) are commercially available and known to the skilled person in the art.

The inlet (7) of the apparatus (3*) is connected outside of the apparatus (3*) to a water pipe and thus feeds water into the apparatus (3), most preferably directly to the heating element (4), where it evaporates. A primary advantage of evaporating water inside the apparatus (3*) is a faster depletion of the gas phase inside the apparatus (3*) from air, and thus oxygen, when compared with the introduction of steam. As a matter of fact, evaporated water, e.g., steam, requires a significantly larger volume than water in the liquid phase. To the contrary, when steam is introduced through the inlet (7), its temperature is reduced, which reduces also the steam volume. Therefore, it is more efficient when the apparatus (3*) contains the heating element (4) and that the steam is produced inside the apparatus (3*).

Preferably, the apparatus (3*) further comprises
- a water filter and/or deionization unit (71) being placed before or after the water inlet (7) for cleaning the water. The filter and/or deionization unit (71) may contain an anti-fouling filter, e.g., an ultrasonic anti-fouling filter, which also hinders Calcium deposition, in particular in the heating element (4). Furthermore, the filter unit (71) may contain an activated carbon purification unit to reduce odorants,
- a valve (81) to regulate the gas/liquid outlet (8), and thus to allow inside the apparatus (3*) a pressure different the outside. The pressure may be a vacuum to, e.g., air removal at the start of the process, and/or enable elevated pressure. The valve (81) is optional, since processing the food products (1) in the apparatus (3*) with the inventive process works most often well without a pressure regulation, e.g., at about ambient pressure,
- one or more sensors (9) to measure the temperature, pressure, humidity, speed of the gas flow, and/or oxygen content of the gas phase. The sensors (9) are most typically connected to the control unit (10) and allow an automated, controlled process based on the measured data inside the apparatus (3*), and/or
- a control unit (10) to control the
   ∘ water and/or steam flow to the heating element (4),
   ∘ the temperature of the heating element (4),
   ∘ the humidity of the gas phase within the apparatus (3*),
   ∘ the circulation speed of the circulation unit (6), and/or
   ∘ the valve (81) to regulate the amount of gas/liquid to exit the outlet (8).

### The uses

The process according to the invention to process food products (1), and the apparatus (3*) according to the invention in which food products (1) can be processed, are preferably used in restaurants, take-away shops, canteens, industrial food processing factories, food processing unit on a farm, and/or at home, but can be employed also in private household. The food products (1) to be processed with the process and/or the within the apparatus, include i) raw food products, such as potato slices, nuts or corn; ii) processed, e.g., extruded, dry food products, such as pellets for expandable snacks; iii) frozen products, such as potato fries, chicken wings or fish bites; iv) food products to be sterilized, such as fruits, meats, seafood, or ready meals; v) reheat food products, such as ready meals; and/or vi) set products, such as apply a coating onto a food product, e.g., applying a breading on a product, such as chicken nuggets.

Furthermore, the process according to the invention to process food products (1), and the apparatus (3*) according to the invention in which food products (1) can be processed, are particularly used to obtain processed food products (1), wherein the processed food products (1) include chips from potatoes, fruits, vegetables or tortilla chips; expanded or extruded snacks; popcorn; nuts; dried products from fruits, vegetables, herbs; potato fries or croquettes; chicken nuggets or wings; coated products, such as schnitzel; fish bites; burger patties; and/or sterilized food, such as fruits, meats, seafood, ready meals; ready meals.

### Examples

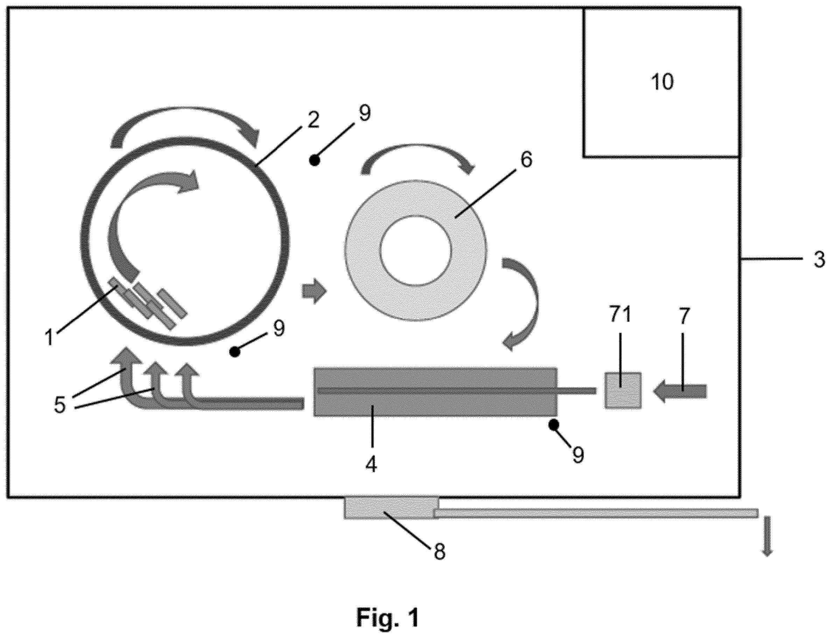

The examples below were performed in a thermally insulated apparatus (3*) as disclosed schematically in Fig. 1. The total volume of the apparatus (3*) is about 46 liters, and the basket (2) is a cylindrical basket having a diameter of 30 cm and a length of 20 cm and is made of corrosion resistant stainless-steel grid. The temperature inside the apparatus (3*), i.e., of the superheated steam, is adjusted by the temperature of the heating element (4) and the amount of water fed to and evaporated by the heating element (4), which was set to a temperature of 450 to 550 °C. The gas circulation unit (6) is a radial fan 10 m/sec. The gas/liquid outlet (8) is at the bottom of the apparatus (3*) and connected to a tube having a 5 cm diameter. No valve (81) was present. Thus, the pressure inside the apparatus (3*) is allowed to equilibrate with the outside, i.e., the pressure was in all examples more than 2.5 bar below the boiling pressure of water at the gas temperature.

Before the addition of the food products (1) to be processed into the apparatus (3*), the latter was preheated and depleted from air to remove oxygen by generating plenty of superheated steam for at least 30 sec. Hence, by introducing initially 25 to 35 ml of water to the heating element (4) over about 0.2 min, the oxygen gas content is already reduced to about less than 3 vol.%.

Care was taken that during most of the process - if not permanently - superheated steam is produced to ensure permanently a mere superheated steam environment to ensure maximum efficiency and best result.

Inside the apparatus (3*) were numerous sensors (9) installed to measure the humidity, oxygen content, and the temperature, which was detected at various locations (see Fig. 1 and explanations thereabout). The circulations speed of the gas circulating unit (6) was controlled and measured at its motor. These sensors (9) were connected to the control unit (10).

For processing the food products (1) according to examples below, the apparatus was preheated and depleted of oxygen gas by feeding and evaporating filtered water for about 0.2 to 1 minute. The oxygen content was below 2 vol.%, determined with a commercial oxygen sensor.

During the process was a constant flow of superheated steam and condensed water moving out of the gas/liquid outlet (8). At the end of the process, no significant dirtying was observed.

In none of the examples was oil added. Therefore, the resulting products were oil free, unless the raw material contained oil.

### Example 1: Processing of potato chips.

Raw potatoes were washed, cleaned and sliced to a thickness of 0.9 mm-1.52 mm. 400 g of the sliced raw potatoes were placed without specific care into the basket (2), which was then transferred into the preheated apparatus (3*) having a temperature of 195°C. Superheated steam, generated by evaporating water by the heating element (4) having a temperature of 450 °C, was already used during the preheating phase to adjust the temperature and to displace the oxygen gas.

The basket (2) was allowed to rotate at a speed of 30 to 40 rpm, and the speed of the gas circulation unit (6) was adjusted to generate an initial steam flow of 15 m/sec. Thus, the food products (1), i.e., raw potato chips having a water content of about 65 to 80 wt.%, started to float, thus mixing themselves due to the turbulences, while the superheated steam flew around the chips.

During the process to make the processed potato chips, the steam temperature, rotation speed of the basket (2), the amount of water added, and the speed of the circulated steam were varied as disclosed in Table 1 below, to adjust the parameters to the reduced density and weight of the potato chips, since water contained in the raw potato was evaporated continuously. The potato chips remained floating during the process.

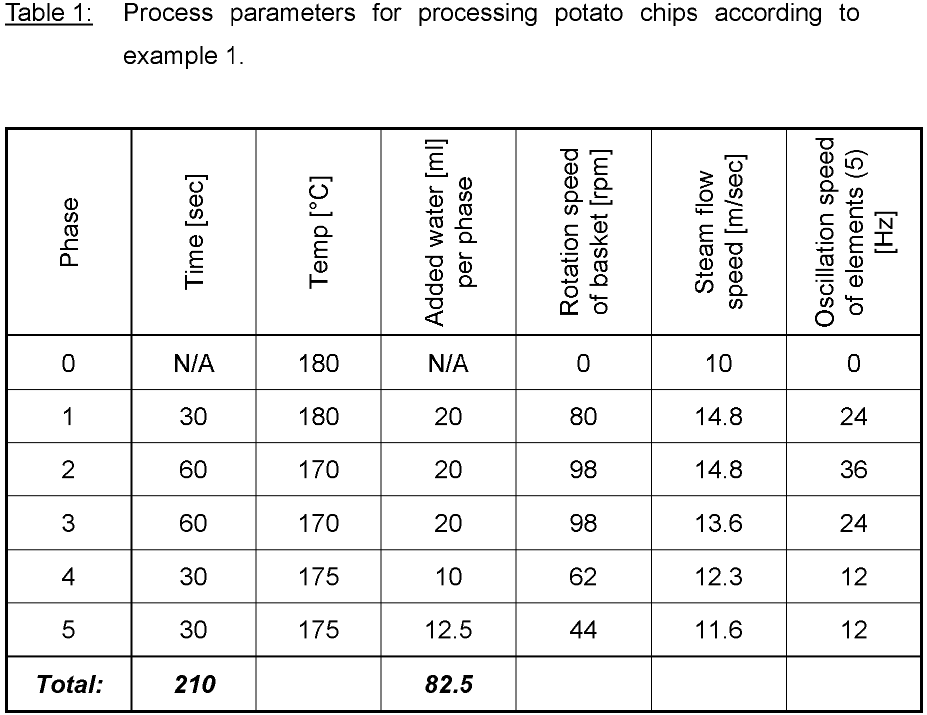

As can be seen from Table 1, the process was - after preheating, which is phase 0 - divided into five phases. Within each phase, the temperature, the added amount of water, the rotation speed of the basked, and/or the oscillation speed of the elements (5) may be varied.

At the end of the process, the basket (2) containing the processed potato chips was removed from the apparatus (3*). The chips obtained had a water content of about 2 to 4 wt.% and were found to be very crispy and crunchy, e.g., even crispier than with the conventional frying process. In addition, their taste was - before the addition of spices - found to be without any off-flavor. No embrowning nor acrylamide formation occurred, i.e., no Maillard reaction took place, leading to light color of the chips. Additionally, there are no indications of any oxidation of the processed chips.

Seasoning the chips without any oil, i.e., addition of spices, is made by applying the seasoning immediately after the process, thus making use of redundant heat and moisture. By doing so, a perfect seasoning coating can be ensured.

Despite the very similar level of crispiness and comparable taste, the potato chips according to example 1 had no oil added, while conventionally fried potato chips have an oil content of 26-37 wt.%. And due to the light color of the chips, there were no signs of acrylamide formation. In addition, the process to make the potato chips according to example requires about 80% less energy than the conventional process with frying. Furthermore, the processing time is about twice as fast as oil frying. Since the apparatus (3*) and the process are easy scalable, they are perfectly suited for use in restaurants, take-away shops, industrial food processing factories, food processing unit on a farm, and canteens, but also for use at home.

The thus obtained potato chips can be packed under standard atmosphere, e.g., no inert gas is required.

### Example 2: Processing of pellets derived expanded snacks.

Example 1 was repeated, whereas 150 g of dry pellets, i.e., extruded formed products, based on a mixture of rice, tapioca, cassava, which may be extruded on site or obtained commercially from a number of suppliers, were used instead of raw potato chips. The pellets have a water content before processing of about 13 wt.%.

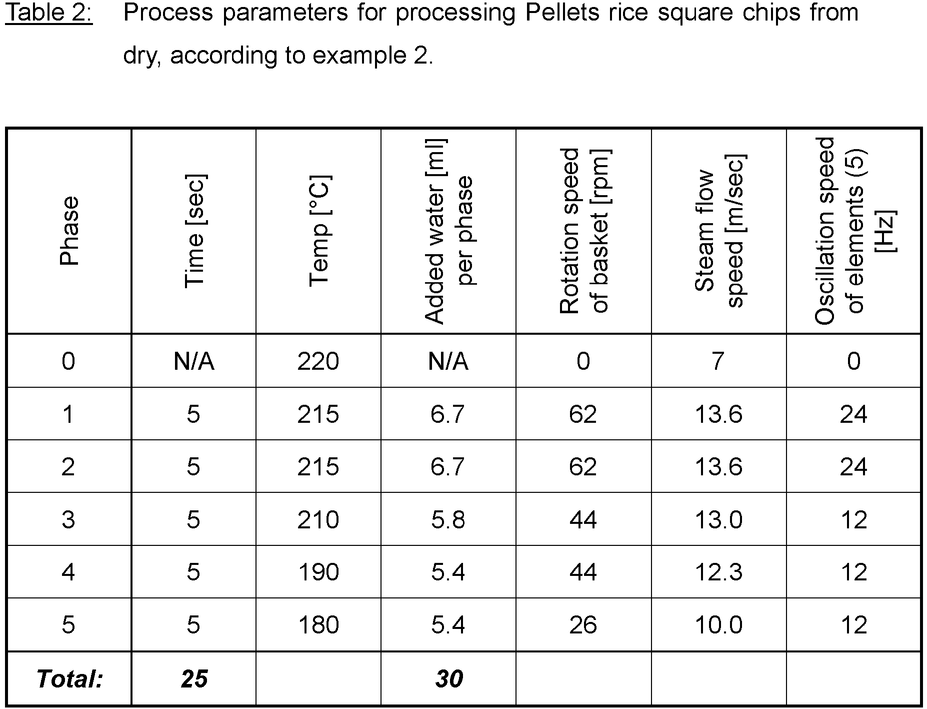

It was found that the pellets expanded readily upon evaporation of the water contained therein. The obtained expanded snacks had a water content of about 2 to 5 wt.%, wherein the standard weight loss is about 7-10 wt.%, based on the amount of products before and after processing. The snacks were found to be very crispy and crunchy, e.g., even crispier than with the conventional frying process. In addition, their taste was - before the addition of spices - found to be without any off-taste. No embrowning nor acrylamide formation occurred, i.e., no Maillard reaction took place, leading to light color of the chips. Additionally, there are no indications of any oxidation of the processed chips.

Seasoning the obtained snacks, i.e., addition of spices, is made by applying the seasoning immediately after the process, thus making use of redundant heat and moisture, Thus, a perfect seasoning coating can be ensured.

Despite the similar level of crispiness and comparable taste, the snacks according to example 2 had no oil added, while conventionally fried snacks have an oil content of 12-24 wt.%. And due to the light color of the chips, there were no signs of acrylamide formation. In addition, the process to make the snacks according to example 2 requires about 80% less energy than the conventional process with frying. Furthermore, the processing time is about 30-50% faster than oil frying. Since the apparatus (3*) and the process are easy scalable, they are perfectly suited for use in restaurants, take-away shops, industrial food processing factories, food processing unit on a farm, and canteens, but also for use at home.

The thus obtained expanded snacks without oil can be packed under standard atmosphere, e.g., no inert gas is required.

### Example 3: Processing of popcorn without oil.

Example 2 was repeated, wherein 125 g corn was used to produce popcorn.

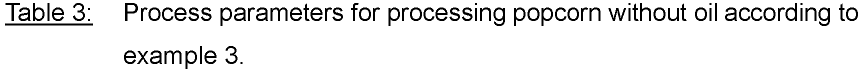

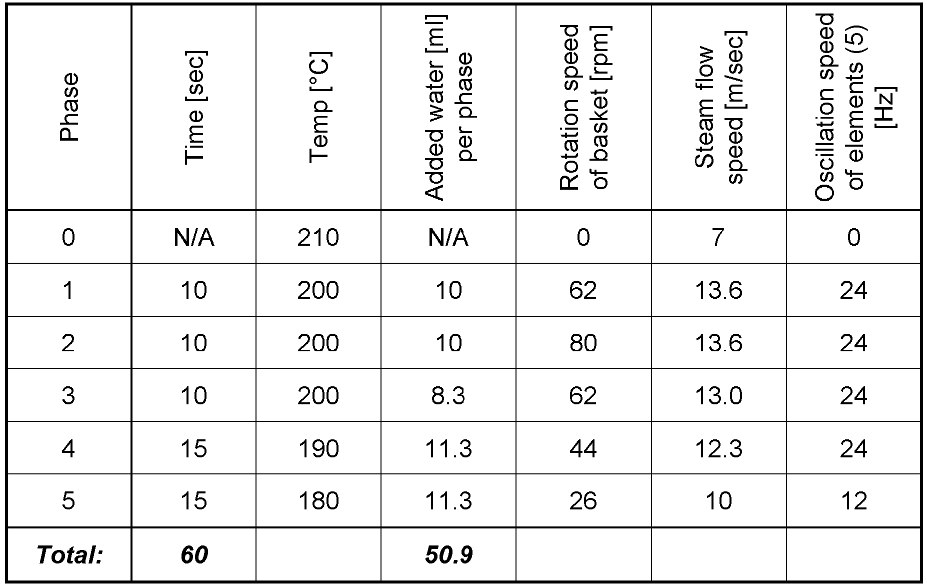

It was found that the popcorn expanded readily. The popcorn was found to be equal to current commercial popcorn with soft texture yet firm and large volume. In addition, the popcorn had a white color. and the shell was hardly visible. In addition, their taste was - before the addition of spices - found to be without any off-taste. No embrowning nor acrylamide formation occurred, i.e., no Maillard reaction took place, leading to light color of the chips. Additionally, there are no indications of any oxidation of the processed chips.

Seasoning the obtained popcorn, i.e., addition of spices, is made by applying the seasoning immediately after the process, thus making use of redundant heat and moisture, Thus, a perfect seasoning coating can be ensured.

Despite the similar level of crispiness and comparable taste, the popcorn according to example 3 had no oil added, while conventionally popcorn has an oil content of 12-24 wt.%. And due to the light color of the popcorn, there were no signs of acrylamide formation. In addition, the process to make the popcorn according to example 3 requires about 60% less energy than the conventional process with popping. Furthermore, the processing time is about 30-50% faster. Since the apparatus (3*) and the process are easy scalable, they are perfectly suited for use in restaurants, take-away shops, industrial food processing factories, food processing unit on a farm, and canteens, but also for use at home.

The thus obtained expanded popcorn without oil can be packed under standard atmosphere, e.g., no inert gas is required.

### Example 4: Processing of frozen French fries.

Example 1 was repeated, whereas 250 g of commercially available frozen French fries were used instead. The specific process parameters are given in Table 4.

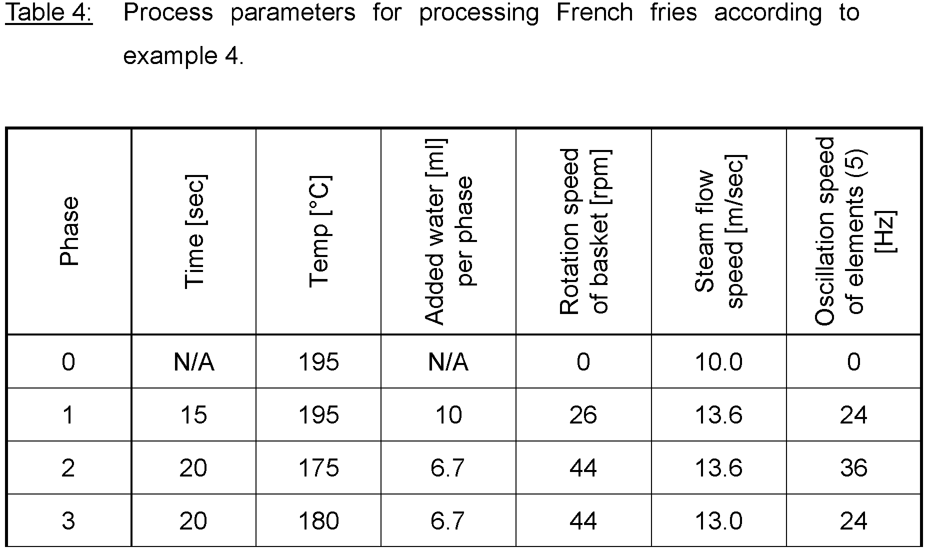

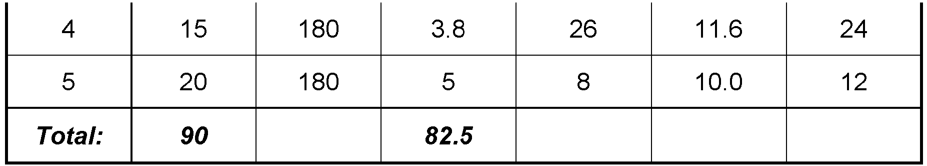

The obtained French fries were found to be very crispy and crunchy, e.g., even crispier than with the conventional frying process. In addition, their taste was - before the addition of spices - found to be without any off-taste. No embrowning nor acrylamide formation occurred, i.e., no Maillard reaction took place, leading to light color of the chips. Additionally, there are no indications of any oxidation of the processed chips.

Seasoning the French fries obtained, i.e., addition of spices, is made by applying the seasoning immediately after the process, thus making use of redundant heat and moisture, Thus, a perfect seasoning coating can be ensured.

Despite the similar level of crispiness and comparable taste, the French fries according to example 4 had no oil added, while conventionally fried French fries have an oil content of 15-20 wt.%. And due to the light color of the chips, there were no signs of acrylamide formation. In addition, the process to make the French fries according to example 4 requires about 80% less energy than the conventional process with frying. Furthermore, the processing time is about 30-50% faster than oil frying. Since the apparatus (3*) and the process are easy scalable, they are perfectly suited for use in restaurants, take-away shops, and canteens, but also for use at home.

### Example 5: Processing of dry pellets onion rings.

Example 1 was repeated, whereas120 g of commercially available dry pellets onion rings, no oil were used instead. The specific process parameters are given in Table 5 below.

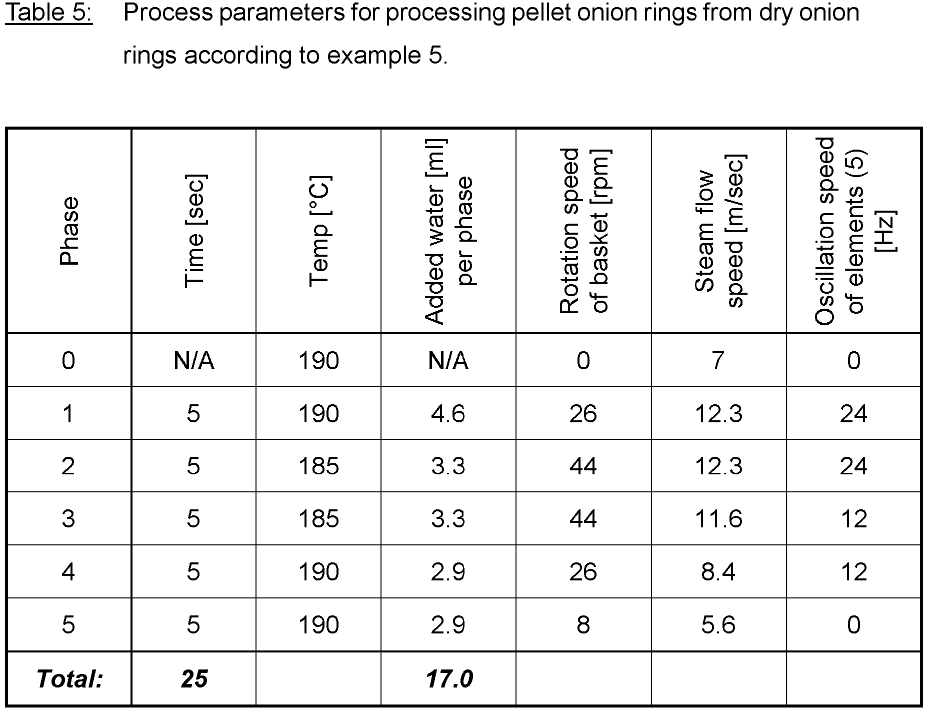

It was found that the pellets expanded readily upon evaporation of the water contained therein. The obtained expanded onion rings had a water content of about 2 to 5 wt.%, wherein the standard weight loss is about 7-10 wt.%, based on the amount of products before and after processing. The onion rings were found to be very crispy and crunchy, e.g., even crispier than with the conventional frying process. In addition, their taste was - before the addition of spices - found to be without any off-taste. No embrowning nor acrylamide formation occurred, i.e., no Maillard reaction took place, leading to light color of the chips. Additionally, there are no indications of any oxidation of the processed chips.

Seasoning the obtained onion rings, i.e., addition of spices, is made by applying the seasoning immediately after the process, thus making use of redundant heat and moisture, Thus, a perfect seasoning coating can be ensured.

Despite the similar level of crispiness and comparable taste, the onion rings according to example 5 had no oil added, while conventionally fried onion rings have an oil content of 12-24 wt.%. And due to the light color of the onion rings, there were no signs of acrylamide formation. In addition, the process to make the onion rings according to example 5 requires about 80% less energy than the conventional process with frying. Furthermore, the processing time is about 30-50% faster than oil frying. Since the apparatus (3*) and the process are easy scalable, they are perfectly suited for use in restaurants, take-away shops, industrial food processing factories, food processing unit on a farm, and canteens, but also for use at home.

The thus obtained expanded onion rings without oil can be packed under standard atmosphere, e.g., no inert gas is required.

### Example 6: Processing of raw apple chips.

Example 1 was repeated, whereas 400 g of sliced, raw apple chips having a mean thickness of 1.52 mm were used instead. The specific process parameters are given in Table 5 below. No oil was used before, during or after the processing.

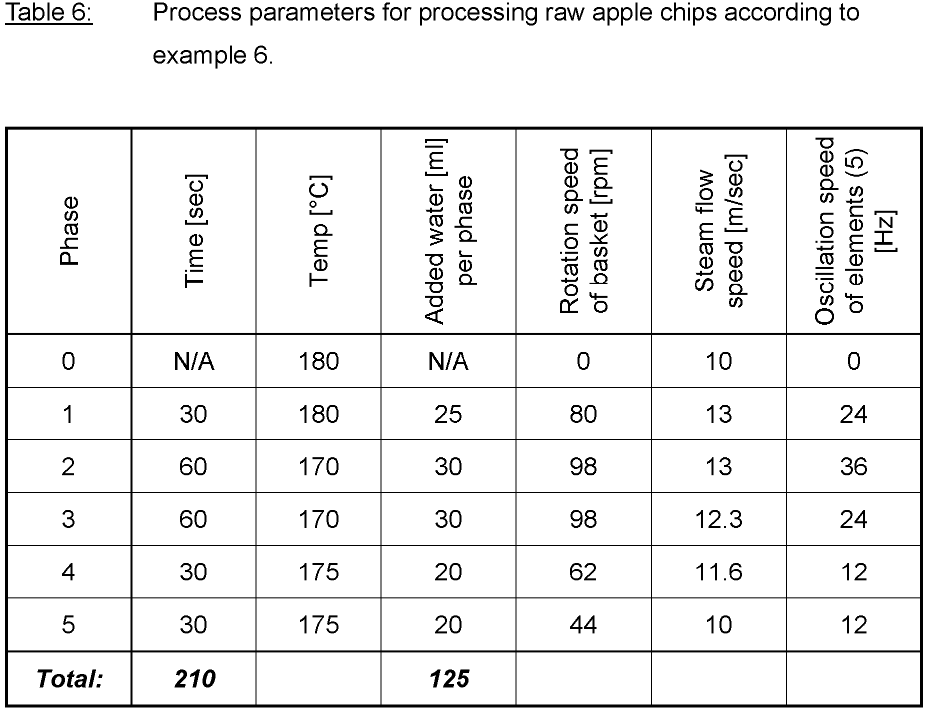

The obtained apple chips had a water content of about 5 wt.%, wherein the standard weight loss is about 80-82 wt.%, based on the amount of products before and after processing. The apple chips were found to be surprisingly crunchy. In addition, their taste was - before the addition of spices - found to be without any off-taste. Some embrowning occurred due to the sugar present, nor acrylamide formation occurred. Additionally, there are no indications of any oxidation of the processed chips.

Despite the similar level of crispiness and comparable taste, the apple chips according to example 6 had no oil added. In addition, the process to make the apple chips according to example 6 requires about 80% less energy than the conventional drying process. Furthermore, the processing time is about at least 90% faster than conventional hot air drying. Since the apparatus (3*) and the process are easy scalable, they are perfectly suited for use in restaurants, take-away shops, industrial food processing factories, food processing unit on a farm, and canteens, but also for use at home.

The thus obtained apple chips can be packed under standard atmosphere, e.g., no inert gas is required.

### Example 7: Non-limiting examples given of products (1) given in Tables 7-1 to 7-6, which can be processed according to the claimed process, including an indication of processing time, temperature and gas speed.

**Table 7-1: Exemplary process parameters to process dry products.**

| **Dry Product** | **Processing Time** ¹⁾ **[sec.]** | **Temperature [°C]** | **Gas speed [m/sec]** |
|---|---|---|---|
| Tortilla Chips | 15 - 60 ¹⁾ | 190 - 220 | 8 - 18 |
| Expandable Snacks | 15 - 60²⁾ | 210 - 230 | 6 - 15 |
| Extruded Snacks | 15 - 30 ³⁾ | 211 - 220 | 6 - 25 |

| | | | |
|---|---|---|---|
| *1) Depends on the desired effect* *2) Pellets are extruded first, and then expanded* *3) Depends on frying or drying effect of snack* | | | |

**Table 7-2: Exemplary process parameters to process raw products.**

| **Raw Product** | **Processing Time** ¹⁾ **[sec.]** | **Temperature [°C]** | **Gas speed [m/sec]** |
|---|---|---|---|
| Potato Chips | 180 - 270 | 170 - 180 | 8 - 25 |
| Vegetable chips | 180 - 270 | 170 - 180 | 8 - 25 |
| Popcorn | 15 - 40 | 210 | 6 - 20 |
| Nuts | 150 - 180²⁾ | 190 - 220 | 12 - 30 |
| Fruit chips | 150 - 210 | 170 - 180 | 8 - 15 |
| Dried fruit | 120 - 360 | 150 - 180 | 8 - 22 |
| Dried vegetables | 90 - 360 | 150 - 180 | 8 - 22 |
| Dried herbs | 10 - 40 | 150 - 160 | 6 - 15 |
| Grains in field | 40 - 120 | 150 - 180 | 6 - 15 |
| Malted grains | 60 - 180 | 150 - 180 | 6 - 15 |

| | | | |
|---|---|---|---|
| *1) The exact processing time depends on the specific product, moisture and size* *2) Depends on nut form and size* | | | |

**Table 7-3: Exemplary process parameters to process frozen products.**

| **Frozen Product** | **Processing Time** ¹⁾ **[sec.]** | **Temperature [°C]** | **Gas speed [m/sec]** |
|---|---|---|---|
| Potato fries | 90 - 150 | 180 - 220 | 10 - 35 |
| Chicken nuggets | 120 - 150 | 190 - 220 | 12 - 38 |
| Chicken wings | 90 - 110 | 190 - 220 | 12 - 38 |
| Croquettes | 80 - 150 | 190 | 8 - 25 |
| Schnitzel | 80 - 120 | 180 - 210 | 8 - 15 |
| Fish bites | 70 - 110 | 180 - 210 | 10 - 28 |
| Burger patties | 30 - 60 | 240 | 12 - 18 |

| | | | |
|---|---|---|---|
| *1) Depends on the specific frozen product, incl. size* | | | |

**Table 7-4: Exemplary process parameters to sterilize products.**

| **Product to sterilise** | **Processing Time** ¹⁾ **[sec.]** | **Temperature [°C]** | **Gas speed [m/sec]** |
|---|---|---|---|
| Fruit | 20 - 40 | 170 - 190 | 6 - 12 |
| Meats | 20 - 90 | 170 - 230 | 6 - 12 |
| Seafood | 20 - 90 | 170 - 220 | 6 - 12 |
| Ready meals | 20 - 60 | 170 - 230 | 6 - 12 |

| | | | |
|---|---|---|---|
| *1) Depends on moisture, product and desired outcome* | | | |

**Table 7-5: Exemplary process parameters to reheat ready meals.**

| **Reheat** | **Processing Time** ¹⁾ **[sec.]** | **Temperature [°C]** | **Gas speed [m/sec]** |
|---|---|---|---|
| Ready meals | 15 - 90 | 160 - 180 | 6 - 12 |

| | | | |
|---|---|---|---|
| *1) The processing time is depending on whether the product is defrosted or frozen* | | | |

**Table 7-6: Exemplary process parameters for applying a coating to set products.**

| **Set product** | **Processing Time** ¹⁾ **[sec.]** | **Temperature [°C]** | **Gas speed [m/sec]** |
|---|---|---|---|
| Various coatings | 15 - 40 | 190 - 220 | 6 - 12 |

| | | | |
|---|---|---|---|
| *1) The processing time depends on product and desired outcome* | | | |

The following reference numbers are used:
- 1: Processed food products (1)
- 2: Basket (2)
- 3: Apparatus (3)
- 3*: Apparatus (3*) according to the invention
- 4: Heating element (4)
- 5: One or more elements (5) to direct steam flow
- 6: Gas circulating unit (6)
- 7: Inlet (7) for water and/or steam

- 71: water filter and/or deionization unit (71)

- 8: Gas/liquid outlet (8)

- 81: valve (81) to regulate the gas/liquid outlet (8)

- 9: Sensor (9)
- 10: Control unit (10)
- 11: Door (11) of the apparatus (3*)

The figure below discloses a non-limiting, schematic example of the apparatus (3*) in which the food products (1) can be processed according to the invention. The disclosure is understood to be part of the description.
- Fig. 1: shows a schematic figure of the apparatus (3*) comprising the basket (2), which contains the food products (1) to be processed, the heating element (4) which evaporates water fed from the inlet (7) and passed through the water filter and/or deionization unit (71) to remove, among others. odor and calcium, elements (5) to direct steam flow from the heating element (4) and the circulated gas, i.e., steam, from below to the basket (2) to enable the food products (1) to float in the basket (2). The latter is exemplary in the form of a lying cylinder, which rotates horizontally to support the floating of the food products (1).
The gas circulation unit (6) is placed to vent the gas out of the basket (2) and to initiate a clockwise gas circulation from the basket (2) to the unit (6), down to the heating element (4), further to the elements (5) and back into the basket (2). Hence, the superheated steam freshly produced by the heating element (4) is directly fed into the basket (2).
A number of sensors (9) are placed inside the apparatus (3") at various locations to measure parameters, such as temperature (all sensor locations), gas circulation speed (sensor between the elements (5) and the basket (2)), oxygen content (sensor near the heating unit (4)) and/or humidity (sensor in upper position between the basket (2) and the gas circulation unit (6)) of the gas. The sensors (9) are in connection with the control unit (10) which may adjust e.g., the amount of water fed into the apparatus (3*) and which is evaporated, the rotation speed of the basket (2) and/or the speed of the gas circulating unit (6).
At the bottom of the apparatus (3*) is the gas/liquid outlet (8), where gas as well as condensed water can exit freely. The apparatus (3*) comprises a door (11, not shown), which is in front of the basket (2) to allow an easy removal of the latter.

## Claims

1. Process to make processed food products (1) without the addition of oil, wherein the food products (1) to be processed are added to a basket (2) which is or is placed into an apparatus (3) comprising one or more elements (5) to direct a steam flow, a gas circulating unit (6), an inlet (7) to feed water and/or steam into the apparatus (3), and a gas/liquid outlet (8), wherein
- water and/or steam is fed through the inlet (7) into the apparatus (3), wherein, when water is added, the water is evaporated with a heating element (4), and the gas temperature in the apparatus (3) is or is adjusted to be 130°C to 330°C,
- the pressure in the apparatus (3) is allowed to be at least 2.5 bar below the boiling pressure of water at the gas temperature in the apparatus (3) to allow steam to be superheated steam, and
- the gas circulating unit (6) is adjusted to allow a gas circulation speed of at least 5 m/sec, when measured between the elements (5) and the basket (2),
**characterized in that** the one or more elements (5) are placed to direct the superheated steam from below the basket (2) to the food products (1) to be processed, wherein the speed of the gas circulation unit (6) is adjusted to allow the food products (1) being processed to float at least partially in the superheated steam flow.

2. Process according to claim 1, **characterized in that** the basket (2) is a closable basket, and the apparatus (3) comprises an engine capable of rotating the basket (2) inside the apparatus (3).

3. Process according to claim 1 or claim 2, **characterized in that** the oxygen content in the apparatus (3) is reduced in a first step to 3 vol.% or lower, preferably by evacuation or displacement by a gas free of oxygen (O₂), preferably steam.

4. Process according to any one of claims 1 to 3, **characterized in that** the amount of food products (1) to be processed in the basket (2) is 20 vol.% or lower, preferably 10 vol.% or lower, based on the volume of the basket (2).

5. Process according to any one of claims 1 to 4, **characterized in that** the
- the process is a batch process,
- the gas temperature in the apparatus (3) is between 140°C and 330°C, preferably between 150°C and 300°C,
- the gas pressure in the apparatus (3) is about room pressure, i.e., there is free gas transfer from the apparatus (3) to the outside environment,
- the processing time of the food products (1) is between 0.1 to 10 minutes, preferably between 0.1 and 7 minutes, and/or
- the oxygen content in the apparatus (3) is adjusted to be 2 vol.% or lower, preferably 1 vol.% or lower.

6. Process according to any one of claims 1 to 5, **characterized in that** the apparatus (3) comprises one or more sensors (9) to measure temperature, gas circulation speed, humidity, and/or pressure, and a control unit (10) to adjust the temperature, gas circulation speed, humidity, pressure, oxygen content and/or the amount of water and/or gas inlet.

7. Process according to any one of claims 1 to 6, **characterized in that** the food products (1) to be processed include i) raw food products, such as potato slices, nuts or corn; ii) processed dry food products, i.e., pellets for expandable snacks; iii) frozen products, such as potato fries, chicken wings or fish bites; iv) food products to be sterilized, such as fruits, meats, seafood, or ready meals; v) reheat food products, such as ready meals; and/or vi) set products, such as apply a coating onto a food product.

8. Process according to any one of claims 1 to 7, **characterized in that** the processed food products (1) include chips from potatoes, fruits, vegetables or tortilla chips; expanded or extruded snacks; popcorn; nuts; dried products from fruits, vegetables, herbs; potato fries or croquettes; chicken nuggets or wings; coated products, such as schnitzel; fish bites; burger patties; and/or sterilized food, such as fruits, meats, seafood, ready meals; ready meals.

9. Apparatus (3*) for applying the process of any one of claims 1 to 8, **characterized in that** the apparatus (3*) comprises the basket (2), the heating element (4), the one or more elements (5) to direct steam flow, the gas circulating unit (6), the inlet (7) to feed water into the apparatus (3*), the gas/liquid outlet (8), and a door (11) to enter into and exit food products (1) from the apparatus (3*), **characterized in that**
- the one or more elements (5) are placed below the basked (2), and
- the gas/liquid outlet (8) is placed
iii) below the one or more elements (5) to direct the steam flow, and
iv) in the lower 10% of the apparatus (3*).

10. Apparatus (3*) according to claim 9, **characterized in that** the apparatus (3*) comprises an engine capable to rotate the basket (2) inside the apparatus (3*), wherein the rotation axis of the basket is horizontal and/or within a deflection of +/- 60° or lower, preferably +/- 45° or lower, relative to the horizontal axis.

11. Apparatus (3*) according to claim 9 or 10, **characterized in that** the
- water inlet (7) is placed to feed water to the heating element (4),
- heating element (4) enables temperatures of 380°C or higher, thus, to allow the generation of superheated steam,
- the gas circulating unit (6) is placed to vent the gas out of the basket (2), wherein the gas circulating unit (6) is preferably a fan, and/or
- the gas/liquid outlet (8) is placed in the lower 5% of the apparatus (3*), preferably at the bottom of the apparatus (3*).

12. Apparatus (3*) according to any one of claims 9 to 11, **characterized in that** the heating element (4) enables temperatures of 450°C or higher, preferably 550°C or higher.

13. Apparatus (3*) according to any one of claims 9 to 12, **characterized in that** the apparatus (3*) further comprises
- a water filter and/or deionization unit (71) being placed before or after the inlet (7) for the water for cleaning the water,
- a valve (81) to regulate the gas/liquid outlet (8), and thus to allow inside the apparatus (3*) a pressure different the outside,
- one or more sensors (9) to measure the temperature, pressure, humidity and/or oxygen content of the gas phase, and/or
- a control unit (10) to control the
∘ water and/or steam flow to the heating element (4),
∘ the temperature of the heating element (4),
∘ the humidity of the gas phase within the apparatus (3*),
∘ the circulation speed of the circulation unit (6), and/or
∘ the valve (81) to regulate the amount of gas/liquid to exit the outlet (8).

14. Use of the process according to any one of claims 1 to 8 and/or of the apparatus (3*) according to any one of claims 9 to 13 to process food products (1), preferably in restaurants, take-away shops, canteens, industrial food processing factories, food processing unit on a farm, and/or at home, wherein the food products (1) to be processed include i) raw food products, such as potato slices, nuts or corn; ii) processed, e.g., extruded, dry food products, such as pellets for expandable snacks; iii) frozen products, such as potato fries, chicken wings or fish bites; iv) food products to be sterilized, such as fruits, meats, seafood, or ready meals; v) reheat food products, such as ready meals; and/or vi) set products, such as apply a coating onto a food product, e.g., applying a breading on a product, such as chicken nuggets.

15. Use of the process according to any one of claims 1 to 8 and/or of the apparatus (3*) according to any one of claims 9 to 13 to obtain processed food products (1), wherein the processed food products (1) include chips from potatoes, fruits, vegetables or tortilla chips; expanded or extruded snacks; popcorn; nuts; dried products from fruits, vegetables, herbs; potato fries or croquettes; chicken nuggets or wings; coated products, such as schnitzel; fish bites; burger patties; and/or sterilized food, such as fruits, meats, seafood, ready meals; ready meals.
